# EUROPÄISCHE PATENTSCHRIFT

(11) **EP 4 176 975 B1**
(45) Veröffentlichungstag und Bekanntmachung des Hinweises auf die Patenterteilung: **05.03.2025**
(21) Anmeldenummer: 21207131.0
(22) Anmeldetag: 09.11.2021
(51) Int. Cl.: B05B 12/20, B05B 12/32, B05D 7/00, B05D 7/14, B05B 16/20, B05D 1/32, B05D 5/06, B62D 25/24, B65D 39/04, B65D 39/16, B65D 41/62, B65D 59/02, F16J 13/08, F16L 55/11, F16L 57/00, H03F 1/52, H03F 3/24, H03F 3/60

(54) **VERFAHREN ZUM LACKIEREN EINES BAUTEILS EINER FAHRZEUGBREMSE, INSBESONDERE EINER NUTZFAHRZEUGBREMSE**
METHOD FOR COATING A COMPONENT OF A VEHICLE BRAKE, IN PARTICULAR A COMMERCIAL VEHICLE BRAKE
PROCÉDÉ DE PEINTURE D'UN COMPOSANT D'UN FREIN DE VÉHICULE, EN PARTICULIER UN FREIN DE VÉHICULE UTILITAIRE

(43) Veröffentlichungstag der Anmeldung: 10.05.2023
(73) Patentinhaber: ZF CV Systems Europe BV, 1170 Brussels (BE)
(72) Erfinder: REDEMANN, Bernward, 68766 Hockenheim (DE); SCHERER, Vitalij, 69181 Leimen (DE); Diesterweg, German, 68519 Viernheim (DE); Montag, Uwe, 68775 Ketsch (DE)
(74) Vertreter: Ohlendorf, Henrike

(56) Entgegenhaltungen:
- DE-A1- 102008 048 127
- DE-A1- 102015 102 169
- DE-A1- 102017 201 298
- DE-A1- 102019 004 282
- DE-A1- 102020 203 860
- DE-U1- 202018 004 768
- US-A1- 2017 209 915

## Beschreibung

Die Erfindung betrifft ein Verfahren zum Lackieren eines Bauteils einer Fahrzeugbremse, insbesondere zum Lackieren eines Bauteils einer Nutzfahrzeugbremse, wobei das Bauteil eine Ausnehmung aufweist, die sich in Richtung einer Längsachse erstreckt, und die eine von Lack freizuhaltende Innenfläche aufweist.

Fahrzeugbremsen, insbesondere Nutzfahrzeugbremsen, sind im Betrieb über ihre Lebensdauer hinweg Umwelteinflüssen ausgesetzt und dadurch korrosionsgefährdet. Um ausreichende Betriebssicherheit zu gewährleisten, müssen Fahrzeugbremsen, insbesondere Nutzfahrzeugbremsen, ihre Korrosionssicherheit üblicherweise durch Testmaßnahmen wie etwa Salzwassersprühtests unter Beweis stellen.

Um die Korrosionsbeständigkeit der Bauteile für Fahrzeugbremsen zu verbessern, werden diese mit korrosionshemmenden Lackierungen beschichtet. Eine übliche Methode ist beispielsweise das sogenannte kathodische oder kataphoretische Tauchlackieren (KTL), bei dem es sich um ein elektrochemisches Verfahren handelt, in welchem Lackpartikel in einem Tauchbad unter Einfluss eines elektrischen Feldes auf dem Bauteil abgeschieden werden.

Die Erfindung betrifft insbesondere solche kataphoretische Tauchlackierverfahren, ist aber auch für andere Verfahren anwendbar.

Die Erfindung betrifft insbesondere die Lackierung von Bremssätteln von Nutzfahrzeugbremsen, ist aber grundsätzlich auch für alle Bauteile anwendbar, die Ausnehmungen mit von Lack freizuhaltenden Innenflächen aufweisen.

### Beschreibung Seite 2 (Reinschrift) und 2a

Die von Lack freizuhaltenden Ausnehmungen sollen beispielsweise deswegen keinen Lack enthalten, weil sie enge Maßtoleranzen einhalten müssen, etwa als Führungsbohrungen, die durch eine Lackierung beeinträchtigt würden. Im Stand der Technik ist es daher entweder nötig gewesen, die Ausnehmungen nach erfolgter Lackierung wieder von Lack zu befreien, oder die Ausnehmungen von außen zu verschließen. Dies wurde realisiert, indem stirnseitig Betriebsmittel, etwa Dichtscheiben, angebracht und axial gegen die Stirnseite verspannt wurden. Ein Nachteil dieser Versuche ist gewesen, dass der Arbeitsaufwand hoch war und die von außen angebrachten Dichtscheiben immer auch einen Teil der Stirnflächen der Bauteile verdeckt haben, sodass nach der Durchführung des Lackierverfahrens und dem Entfernen der Betriebsmittel zum Verschließen der Ausnehmung stirnseitig unlackierte Stellen vorhanden waren, die dann nicht die erforderliche Korrosionsbeständigkeit aufwiesen.

Als nächstliegenster Stand der Technik wird die DE 10 2019 004 282 A1 angesehen. Aus dem Dokument geht eine Maske zum Maskieren eines Endabschnitts einer Zylinderbohrung in einem Kurbelgehäuse während einer thermischen Beschichtung hervor. Der Einsatz der Maske in einer Fahrzeugbremse wird nicht offenbart.

Die Erfindung widmet sich demzufolge der Aufgabe, die Korrosionsbeständigkeit von Bauteilen einer Fahrzeugbremse zu verbessern, indem ein verbessertes Verfahren zu deren Lackierung angegeben wird.

Die Erfindung löst die ihr zugrundeliegende Aufgabe, indem das eingangs bezeichnete Verfahren die folgenden Schritte umfasst:
- Bereitstellen des Bauteils,
- Einführen eines Dichtstopfens in die Ausnehmung des Bauteils, wobei der Dichtstopfen eine Dichtfläche aufweist, und die Dichtfläche innerhalb der Ausnehmung, bezogen auf die Längsachse, in radialer Richtung dichtend mit der Innenfläche in Anlage gebracht wird, und
- Lackieren des Bauteils, nachdem der Dichtstopfen eingeführt worden ist

Die Erfindung folgt dem Ansatz, dass der Dichtstopfen seine Dichtwirkung ausschließlich im Inneren der Ausnehmung entfaltet, indem er sich in radialer Richtung dichtend mit der Innenfläche der Ausnehmung in Anlage begibt, wenn er eingeführt ist. Es erfolgt insbesondere gemäß der Erfindung keine Abdichtung in axialer Richtung gegen die stirnseitigen Außenflächen der Ausnehmung. Durch diese Weiterentwicklung des Dichtstopfens und die Konzentration auf eine Abdichtung in radialer Richtung an der Innenfläche der Ausnehmung wird das Freibleiben sogenannter blinder Stellen während des Lackierens an der Außenfläche der Fahrzeugbremse vermieden. Es kann im weiteren Verlauf nicht zu einer Korrosion an solchen Stellen kommen, wodurch die Korrosionsbeständigkeit der Bauteile der Fahrzeugbremse entscheidend verbessert wird.

Das Verfahren wird dementsprechend vorteilhaft weitergebildet, indem das Bauteil eine Stirnfläche aufweist, in welche die Ausnehmung eingebracht ist, und der Dichtstopfen derart in die Ausnehmung eingeführt wird, dass er in eingeführtem Zustand zu der Stirnfläche beabstandet ist.

**In** einer weiteren bevorzugten Ausführungsform ist die vorstehend beschriebene Stirnfläche eine erste Stirnfläche, und das Bauteil weist ferner eine zweite Stirnfläche auf, wobei sich die Ausnehmung von der ersten Stirnfläche bis zu der zweiten Stirnfläche durch das Bauteil hindurch erstreckt, wobei das Bauteil vorzugsweise ein Bremssattel ist, und der Dichtstopfen derart in die Ausnehmung eingeführt wird, dass er in eingeführtem Zustand zu der ersten Stirnfläche und zu der zweiten Stirnfläche beabstandet ist.

**In** einer weiteren bevorzugten Ausführungsform ist im Inneren der Ausnehmung eine Gleithülse angeordnet, die eine Gleitfläche aufweist, welche wiederum einen Teil der Innenfläche der Ausnehmung bildet. Üblicherweise sind solche Gleithülsen in die Ausnehmungen eingepresst. Das Verfahren ist insoweit gegenüber dem Stand der Technik vorteilhaft, weil das Einpressen der Gleithülsen nun auch bereits vor dem Lackieren erfolgen kann. Der Dichtstopfen verhindert zuverlässig, dass Lack in die Ausnehmung eindringt und sich ungewollt an der Gleithülse niederschlägt.

In einer bevorzugten Weiterbildung wird der Dichtstopfen so eingeführt, dass er im eingeführten Zustand, vorzugsweise vollflächig, mit wenigstens einer Dichtfläche dichtend an der Gleitfläche der Gleithülse anliegt.

Sofern der Dichtstopfen mehrere Dichtflächen aufweist, werden diese gemeinsam auch als Dichtflächenanordnung bezeichnet.

In einer weiteren bevorzugten Ausführungsform ist die Dichtfläche eine erste Dichtfläche, und der Dichtstopfen weist ferner wenigstens eine zweite Dichtfläche auf, die in Längsrichtung zu der ersten Dichtfläche beabstandet am Dichtstopfen angeordnet ist, wobei der Dichtstopfen derart eingeführt wird, dass er auch mit der zweiten Dichtfläche innerhalb der Ausnehmung, bezogen auf die Längsrichtung in radialer Richtung, dichtend mit der Innenfläche in Anlage gebracht wird.

Weiter vorzugsweise ist die Gleithülse eine erste Gleithülse, und im Inneren der Ausnehmung ist ferner eine zweite Gleithülse angeordnet, die eine zweite Gleitfläche aufweist, welche einen Teil der Innenfläche der Ausnehmung bildet. Vorzugsweise wird der Dichtstopfen dann derart eingeführt, dass er im eingeführten Zustand, vorzugsweise vollflächig, mit der zweiten Dichtfläche dichtend an der zweiten Gleitfläche der zweiten Gleithülse anliegt.

**In** weiteren bevorzugten Ausführungsformen weist die Ausnehmung eine oder mehrere weitere Gleithülsen auf, und der Dichtstopfen ist entsprechend ausgebildet, dass er auch an jenen Gleitflächen, vorzugsweise vollflächig, im eingeführten Zustand anliegt.

Alternativ oder zusätzlich zu einem Abdichten direkt an den Gleitflächen der Gleithülsen sieht eine bevorzugte Ausführungsform des Verfahrens vor, dass die erste und zweite Dichtfläche des Dichtstopfens derart zueinander beabstandet sind, dass sie die Gleithülse oder Gleithülsen zwischen sich einschließen.

Vorzugsweise liegt im eingeführten Zustand zumindest eine der Dichtflächen an einem in Richtung der Längsachse endseitigen Abschnitt der Gleithülsen dichtend an.

In einer weiteren bevorzugten Ausführungsform liegt zumindest eine der Dichtflächen neben den Gleithülsen, axial beanstandet oder angrenzend, an der Ausnehmung dichtend an.

In einer weiteren bevorzugten Ausführungsform der Erfindung weist der Dichtstopfen einen Grundkörper aus einem elastisch verformbaren Material auf, vorzugsweise Silikon, oder einen silikonhaltigen Werkstoff. Diese Werkstoffwahl bietet den Vorteil, dass der Dichtstopfen sehr gute elastische Verformungseigenschaften aufweist, und zudem nach Verwendung leicht gereinigt und für eine Wiederverwendung aufbereitet werden kann.

Weiter vorzugsweise ist der Grundkörper des Dichtstopfens als Hohlkörper mit einer Längsachse ausgebildet, und ist vorzugsweise in Richtung seiner Längsachse an einem oder beiden Enden offen. Die Ausgestaltung als Hohlkörper erleichtert das radiale Komprimieren des Dichtstopfens und somit seine Einführung in die Ausnehmung. Ein offener Dichtstopfen, insbesondere, wenn er in beide Richtungen offen ist, verbessert den Fluss des Lackierungsmittels in einem Tauchverfahren und trägt zur Vermeidung eines ungewollten Verschleppens von Lackierungsmittel und/oder anderern für den Lackierprozess notwendigen Flüssigkeiten in nachfolgende Bearbeitungsschritte, wie etwa nachfolgende Tauchbäder, bei. Das (Lack- und/oder andere)Mittel kann durch den Dichtstopfen hindurchströmen, während unvermindert die freizuhaltende Innenfläche der Ausnehmung durch den Dichtstopfen geschützt wird. Vorzugsweise weist der Dichtstopfen um die Ausnehmung herum eine Verjüngung auf, besonders bevorzugt eine konische Verjüngung. Die Verjüngung erschwert ein ungewolltes Ansammeln von Flüssigkeit im Bereich der Ausnehmung und verbessert so deren Abfluss.

In einer weiteren bevorzugten Ausführungsform ist der Dichtstopfen im Bereich zumindest eines seiner Enden versteift, wobei der Dichtstopfen vorzugsweise eine Materialaufdickung und/oder einen Stützring aufweist, und wobei in dem Schritt des Einführens vorzugsweise auch das versteifte Ende in die Ausnehmung eingeführt wird. Dies verbessert den Halt des Dichtstopfens innerhalb der Ausnehmung während des Tauchvorgangs bzw. während des Lackierens. Wie eingangs erwähnt, spielt die Erfindung ihre Vorteile zwar in besonderem Maße bei Tauchlackierverfahren aus, die Schutzwirkung des Dichtstopfens tritt aber genauso bei Sprühlackierverfahren auf.

In einer weiteren bevorzugten Ausführungsform umfasst das Verfahren ferner die Schritte:
- Entfernen des Dichtstopfens nach dem Schritt des Lackierens,
- Reinigen des Dichtstopfens von Lackresten, und
- Bereitstellen des Dichtstopfens zur erneuten Verwendung in einem weiteren Durchgang des Verfahrens.

Die Wiederverwendung von Betriebsmitteln, wie dem hier beschriebenen Dichtstopfen, trägt zur Nachhaltigkeit des Fertigungsprozesses bei und leistet einen Beitrag zur Umweltverträglichkeit.

Die Erfindung ist vorstehend in einem ersten Aspekt unter Bezugnahme auf das erfindungsgemäße Verfahren beschrieben

Die Erfindung wird im Folgenden unter Bezugnahme auf die beigefügten Figuren anhand bevorzugter Ausführungsbeispiele näher beschrieben. Hierbei zeigen:
- Fig. 1: ein Bauteil einer Fahrzeugbremse, vorbereitet zum Lackieren im erfindungsgemäßen Verfahren,
- Fig. 2-7: bevorzugte Ausführungsformen des erfindungsgemäßen Dichtstopfens für die Verwendung im erfindungsgemäßen Verfahren, und
- Fig. 8: ein schematisches Ablaufdiagramm eines Ausführungsbeispiels des Verfahrens.

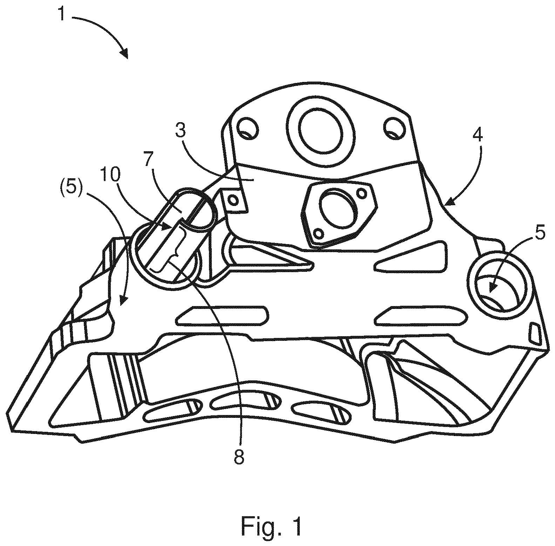

Fig. 1 zeigt als Ausschnitt eines Nutzfahrzeugs 1 ein Bauteil 3 eines Bremssystems des Nutzfahrzeugs 1, nämlich einen Bremssattel. Das Bauteil 3 ist im vorliegenden Ausführungsbeispiel als Gussteil hergestellt, könnte aber auch ein anderweitig hergestelltes Bauteil sein. Es weist einen Grundkörper 4 auf, in den mehrere Ausnehmungen 5 eingebracht sind. Die Ausnehmungen 5 sind beispielsweise als Bolzenführungen zur Aufnahme und Linearführung von Bolzen zur Bremsbelagsverstellung eingerichtet. In dem in Fig. 1 linken Teil des Bauteils 3 ist in einer der Ausnehmungen 5 ein Dichtstopfen 7 eingeführt. Ein Handhabungsabschnitt 8 ragt aus der Ausnehmung 5 heraus. An dem Handhabungsabschnitt 8 sind eine oder mehrere, vorliegend zwei gegenüberliegende, Ausnehmungen 10 eingebracht, mittels derer der Handhabungsabschnitt 8 zusammengedrückt werden kann, um ein Einführen und Entnehmen des Dichtstopfens 7 in die Ausnehmung 5 hinein beziehungsweise aus der Ausnehmung 5 heraus zu erleichtern.

Der Dichtstopfen 7 wird mittels einer Klemmkraft in radialer Richtung im Wesentlichen reibschlüssig in der Ausnehmung 5 gehalten. Hierauf wird anhand mehrerer verschiedener Ausführungsbeispiele in den folgenden Figuren näher eingegangen.

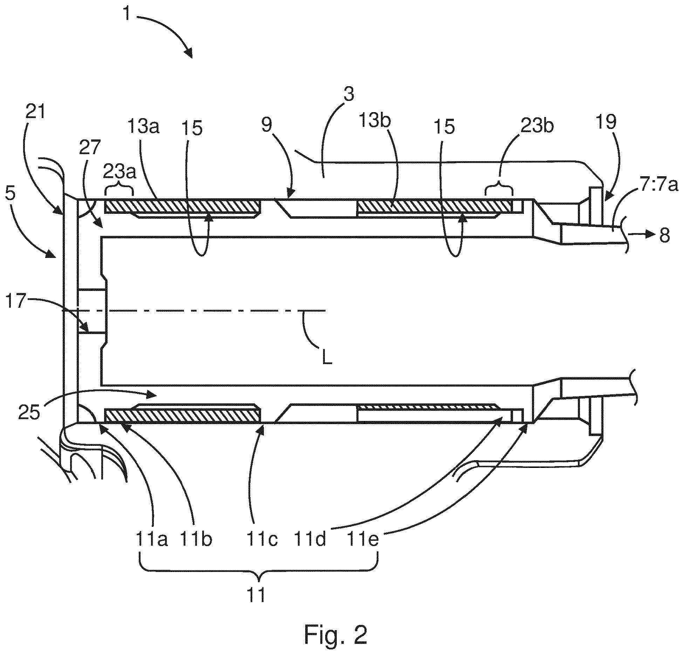

Die Fig. 2-7 zeigen verschiedene Ausführungsformen des Dichtstopfens 7, die in wesentlichen Grundprinzipien miteinander übereinstimmen. So weisen alle Dichtstopfen eine im Wesentlichen zylindrische Grundform auf und sind aus einem silikonhaltigen Werkstoff, insbesondere Silikon, hergestellt. Die Dichtstopfen 7 weisen jeweils eine Dichtflächenanordnung 11 auf, die in den unterschiedlichen Varianten verschiedentlich zusammengesetzt sein kann. Den Dichtflächenanordnungen 11 ist aber gemein, dass sie aufgrund eines leichten Übermaßes der Dichtstopfen 7 in radialer Richtung gegen eine Innenfläche 9 der Ausnehmung 5 dichtend anliegen und in radialer Richtung relativ zu einer Längsachse L eine Klemmkraft aufbringen, die den Dichtstopfen 7 reibschlüssig in der Ausnehmung 5 hält.

Die Ausnehmung 5 erstreckt sich für alle Ausführungsbeispiele von einer ersten Stirnseite 19 zu einer zweiten Stirnseite 21 durch das Bauteil 3 hindurch, und die Dichtstopfen 7 sind derart in die Ausnehmung 5 eingeführt, dass die Dichtstopfen 7 an beiden Stirnseiten 19, 21 nicht an den Stirnseiten 19, 21 anliegen, sondern von diesen beabstandet sind.

Die Dichtstopfen 7a-7e gemäß den Fig. 2-6 weisen jeweils einen hohlzylindrischen Grundkörper 25 auf, der an zumindest einem Ende eine Durchlassöffnung 17 oder wenigstens eine radiale Ausnehmung 29 zum Ablassen von Lackiermittel, insbesondere zur Vermeidung eines ungewollten Verschleppens von Lackierungsmittel und/oder andere für den Lackierungsprozess notwendige Flüssigkeiten in nachfolgende Bearbeitungsschritte, aufweist.

Die Dichtstopfen 7a-7e gemäß den Fig. 2-6 weisen an demjenigen Ende, das dem Handhabungsabschnitt 8 gegenüberliegt, eine Versteifung in Form einer Materialaufdickung 27 auf. Auf der Seite des Handhabungsabschnitts sind vorzugsweise eine oder mehrere Angriffselemente, beispielsweise Laschen, vorgesehen, die das Herausziehen des Dichtstopfens nach der Lackierung erleichtern. Vorzugsweise weist der Dichtstopfen im Bereich des Handhabungsabschnitts eine oder mehrere Laschen auf, die dazu eingerichtet sind, das Herausziehen des Dichtstopfens nach der Lackierung zu erleichtern.

In der Ausnehmung 5 ist exemplarisch in allen Ausführungsbeispielen wenigstens eine Gleithülse, nämlich eine erste Gleithülse 13a und eine zweite Gleithülse 13b eingesetzt, insbesondere eingepresst. Die Gleithülsen 13a, 13b weisen jeweils eine Gleitfläche 15 auf, die einen Teil der Innenfläche 9 der Ausnehmung 5 bildet.

Nachfolgend wird auf die konstruktiven Unterschiede und unterschiedlichen Funktionsweisen der verschiedenen Dichtstopfen 7a-7f eingegangen.

Der Dichtstopfen 7a gemäß Fig. 2 weist eine Mehrzahl von Dichtflächen 11a - 11e auf, welche zum Abdichten der Ausnehmung 5 eingerichtet sind. So weist der Dichtstopfen 7a insgesamt drei Dichtflächen 11a, 11c, 11e auf, die dichtend direkt an der Innenfläche 9 der Ausnehmung 5 anliegen, wobei die Dichtflächen 11a, 11e jeweils neben den Gleithülsen 13a, 13b an der Innenfläche 9 der Ausnehmung 5 anliegen und die Gleithülsen 13a, 13b zwischen sich einschließen. Die Dichtfläche 11a liegt direkt angrenzend an der Gleithülse 13a an, während die gegenüberliegend angeordnete Dichtfläche 11e axial zu der Gleithülse 13b beabstandet angeordnet ist. Eine abweichende Gestaltung ist aber durchaus denkbar, wie sich auch aus den weiteren Ausführungsbeispielen ergeben wird. Zwischen den Dichtflächen 11a und 11b und zwischen 11d und 11e ist vorzugsweise jeweils mindestens eine Abstützfläche angeordnet, insbesondere senkrecht zu den Dichtflächen ausgerichtet, die sich an der Gleithülse abstützt und den Dichtstopfen innerhalb der Ausnehmung 5 positioniert.

Die Gleithülse 13a befindet sich ferner in dichtender Anlage mit einer Dichtfläche 11b, und zwar in einem endseitigen Abschnitt 23a der Gleithülse 13a. Ebenso befindet sich eine Dichtfläche 11d der Dichtflächenanordnung 11 in einem endseitigen Abschnitt 23b der Gleithülse 13b in dichtender Anlage mit der Gleithülse 13b.

Zwischen den Dichtflächen 11b, 11d ist eine weitere Dichtfläche 11c angeordnet, die auch einen Einzelabschluss der Gleithülsen 13a, 13b in jeweiligen Kavitäten mit einerseits der Dichtfläche 11a und andererseits mit der Dichtfläche 11e bewirkt.

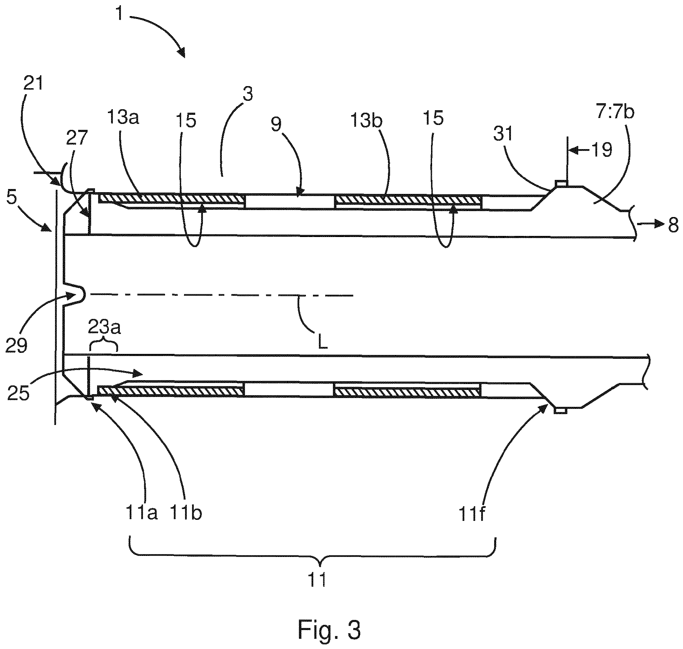

Der Dichtstopfen 7b gemäß Fig. 3 unterscheidet sich insoweit von dem Dichtstopfen gemäß Fig. 2, dass die Dichtflächenanordnung 11 eine etwas geringere Anzahl Dichtflächen aufweist. Die Gleithülsen 13a, 13b sind ebenfalls von zwei endständigen Dichtflächen 11a, 11f eingeschlossen, wobei die Dichtfläche 11a wie in Fig. 2 ausgebildet und angeordnet ist, während aber die Dichtfläche 11f an einer Fase 31 in der Ausnehmung 5 dichtend anliegt. Wie aus Fig. 3 ferner zu erkennen ist, ist aber die Fase relativ zu der Stirnseite 19 des Bauteils 3 leicht zurückgesetzt, sodass auch in diesem Ausführungsbeispiel der Dichtstopfen, und insbesondere die Dichtflächen 11a-11f, von beiden Stirnseiten 19, 21 beabstandet sind. Der holzylindrische Grundkörper 25 gemäß Fig. 3 ist an seiner Innenseite durchgehend gleichförmig ausgebildet, weist am in Fig. 3 linken Endabschnitt aber eine radiale Ausnehmung 29 zum Abführen von Lackmittel auf.

Benachbart zu der Dichtfläche 11a weist der Dichtstopfen 7b eine zusätzliche Dichtfläche 11b auf, die in einem endseitigen Abschnitt 23a an der Gleithülse 13a dichtend anliegt, wie in Fig. 2 bereits beschrieben.

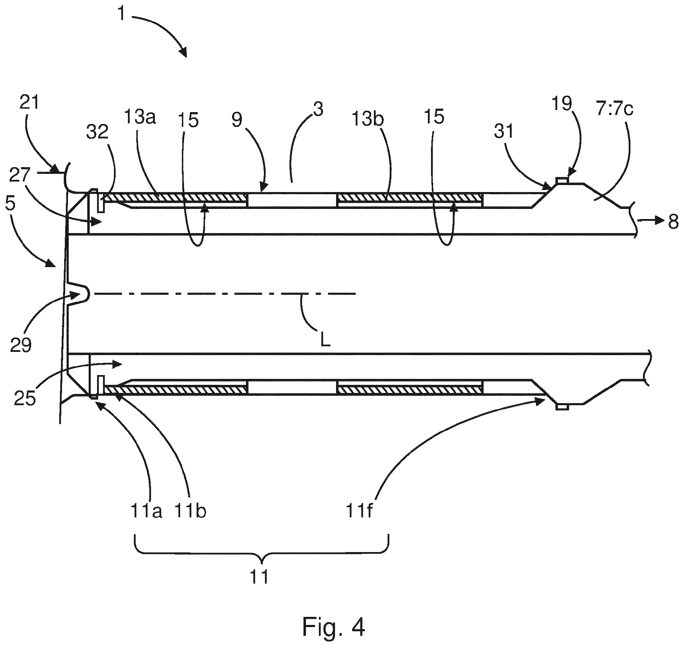

Der in Fig. 4 gezeigte Dichtstopfen 7c ist hinsichtlich der Anordnung seiner Dichtflächen 11a-11f entsprechend dem Dichtstopfen 7b gemäß Fig. 3 aufgebaut, weswegen bezüglich identischer Bezugszeichen zur Vermeidung von Wiederholungen auf die obigen Ausführungen verwiesen wird. Im Unterschied zu dem Dichtstopfen 7b der Figur 3 weist der Dichtstopfen 7c an seinem in Fig. 4 linken Ende, also dem Ende gegenüber des Handhabungsabschnitts 8, zur zusätzlichen Versteifung einen Stützring 32 auf. Der Stützring 32 stabilisiert, vorzugsweise zusätzlich zu der Materialaufdickung 27, oder alternativ dazu, den Grundkörper 25 und erhöht die radiale Klemmwirkung innerhalb der Ausnehmung 5.

Die Dichtstopfen 7a bis 7c schützen jeweils auf beiden Seiten der Ausnehmung 5 vor einem Eindringen von Lack bis zu den Gleithülsen 13a, 13b.

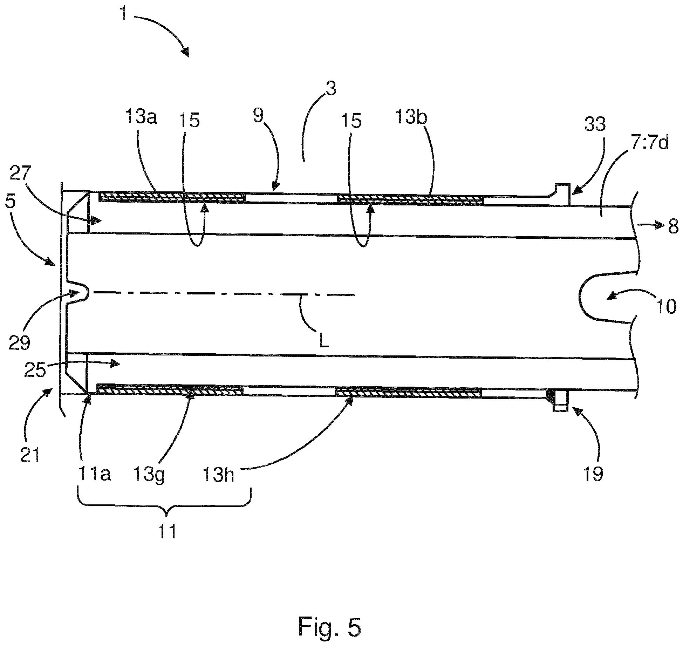

Als Variante zu diesen Ausführungsformen, die sich besonders für ein vollständiges Eintauchen des Bauteils 3 in ein Lackierbad, oder für ein allseitiges Lackieren des Bauteils 3 mit anderen Methoden eignen, ist in Fig. 5 ein Dichtstopfen 7d vorgestellt, der ebenso dazu geeignet ist, für solche Verfahren geeignet ist, bei denen das gesamte Bauteil 3 lackiert werden soll.

Der Dichtstopfen 7d weist eine Dichtflächenanordnung 11 auf, die an der dem Handhabungsabschnitt 8 gegenüberliegenden Seite des Dichtstopfens 7d ausgebildet ist, und dort eine Dichtfläche 11a und zwei weitere Dichtflächen 11g, 11h aufweist. Die Dichtfläche 11a dient zur zusätzlichen Abdichtung, als Ausrutschsicherung und/oder zur Zentrierung. Die Dichtflächenanordnung 11 weist ferner die Dichtflächen 11g, 11h auf, mittels derer der Dichtstopfen 7d hauptsächlich und direkt gegen die Gleitflächen 15 abdichtet.

Von der rechten Seite her verbleibt ein offener Spalt 33 in der Ausnehmung 5 nach Einführen des Dichtstopfens 7d, sodass dort theoretisch Material eindringen könnte, allerdings nicht bis auf die Gleitflächen 15.Auch der Dichtstopfen 7d ist zu beiden Stirnseiten 19, 21 beabstandet, selbst wenn er vollständig eingeführt ist.

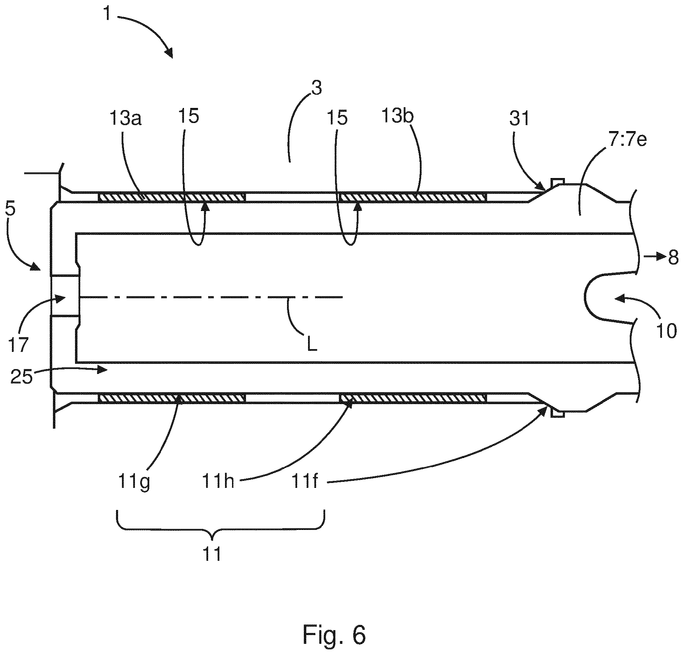

Der in Fig. 6 gezeigte Dichtstopfen 7e unterscheidet sich insoweit von den vorherigen Ausführungsformen der Figuren 1 bis 4, dass der Grundkörper 25 des Dichtstopfens 7e nicht nur jeweils in einem endseitigen Bereich an Gleithülsen 13a, 13b anliegt, sondern dass die Dichtflächenanordnung 11 wie auch in Fig. 5 jeweils Dichtflächen 11g, 11h aufweist die, vorzugsweise über die gesamte Länge der Gleithülsen 13a, 13b, also vollflächig, an deren Gleitflächen 15, dichtend anliegen und auf diese Weise ein ungewolltes Beschichten der Gleitflächen 15 innerhalb der Ausnehmung 5 verhindern. An der dem Handhabungsabschnitt 8 zugewandten Seite des Dichtstopfens 7e weist die Dichtflächenanordnung 11 im Unterschied zu Fig. 5 wiederum eine die Fase 31 abdichtende, konisch ausgebildete Dichtfläche 11f auf. Wie in Fig. 2 weist der Dichtstopfen 7e an seinem dem Handhabungsabschnitt 8 gegenüberliegenden Ende eine Durchlassöffnung 17 auf.

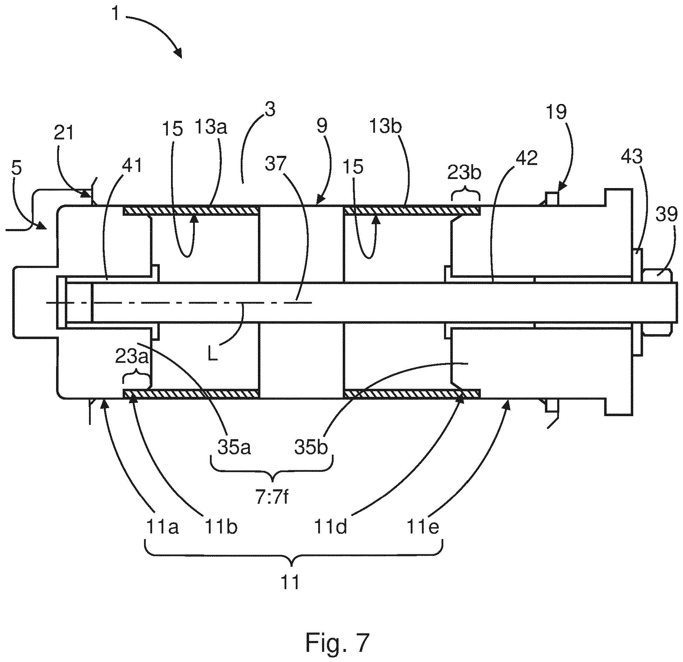

Während in den Figuren 2 bis 6 jeweils ein einteiliger Dichtstopfen 7a-7e gezeigt ist, wird in Fig. 7 ein Dichtstopfen 7f vorgestellt, der aus einem ersten Stopfenteil 35a und einem zweiten Stopfenteil 35b ausgebildet wird. Die Stopfenteile 35a, 35b sind durch Spannmittel miteinander wirkverbunden, beispielsweise mittels einer Spindel 37 und einer Spannmutter 39, die gegen eine Scheibe 43 abgestützt ist, und können mittels der Spannmittel eine Spannkraft erzeugen. Die Spannbewegung wird über jeweils in die Stopfenteile 35a, 35b eingelassene Hülsen 41, 42 übertragen. Das Spannen des Dichtstopfens 7f innerhalb der Ausnehmung 5 bewirkt, dass die aus einem elastisch verformbaren Material, insbesondere einem silikonhaltigen Werkstoff oder Silikon, hergestellten Stopfenteile 35a, 35b gegen die Gleithülsen 13a, 13b bewegt werden und bei Erreichen eines ausreichenden Spannwiderstandes in axialer Richtung gestaucht werden. Die axiale Stauchbewegung führt zu einem Ausweichen des Materials in radialer Richtung, wodurch dann die erfindungsgemäße radiale Dicht- und Klemmkraft innerhalb der Ausnehmung 5 erzeugt wird. Auch der Dichtstopfen 7f gemäß Fig. 7 ist von den beiden Stirnseiten 19, 21 beabstandet und liegt nicht an ihnen an. So kann auch mit dem Dichtstopfen 7f gemäß Fig. 7 das Bauteil 3 von außen vollständig lackiert werden, während die Ausnehmung 5 bzw. deren Innenfläche 9, inklusive der Gleitflächen 15 der Gleithülsen 13a, 13b, von Lack vollständig freigehalten werden kann.

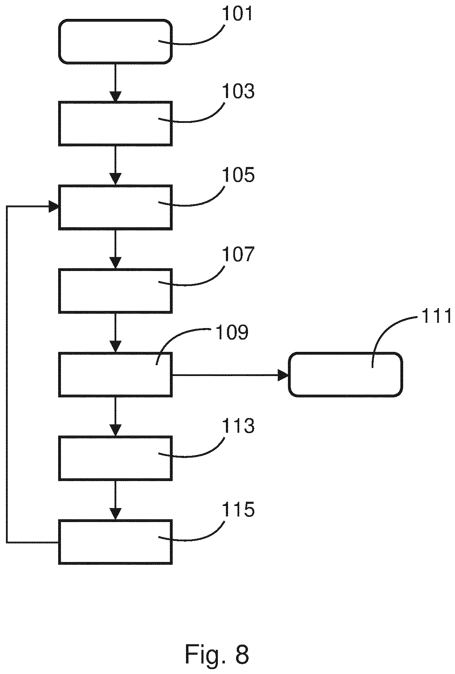

Anhand des Verfahrensschemas gemäß Fig. 8 soll schließlich die Verwendung der Dichtstopfen 7 gemäß den Figuren 1 bis 7 im erfindungsgemäßen Verfahren erläutert werden.

Ein erster Schritt 101 stellt den Verfahrensbeginn dar. Zu Beginn des Verfahrens 101 wird in einem Schritt 103 ein Bauteil einer Fahrzeugbremse, insbesondere ein Bremssattel für eine Nutzfahrzeugbremse, sowie ein Dichtstopfen 7, beispielsweise einer der Dichtstopfen 7a-7f, bereitgestellt.

In einem nächsten Verfahrensschritt 105 wird der Dichtstopfen 7 in eine Ausnehmung 5 des Bauteils 3 eingeführt, wobei das Bauteil 3 eine von Lack freizuhaltende Innenfläche 9 aufweist. Der Dichtstopfen 7 wird so eingeführt, dass sich seine Dichtflächenanordnung 11, die wenigstens eine Dichtfläche 11a-11h aufweist, innerhalb der Ausnehmung 5 dichtend in radialer Richtung gegen die Innenfläche 9 anlegt, und die Ausnehmung 5 dadurch lackdicht verschließt. In einem nächsten Schritt 107 wird sodann das Bauteil 3 lackiert. Während des Lackierens wird der Dichtstopfen 7 durch die Klemmkraft des in der Ausnehmung 5 elastisch verformten Materials reibschlüssig gehalten.

Nach dem Lackieren wird der Dichtstopfen 7 aus der Ausnehmung 5 entfernt, beispielsweise indem der Dichtstopfen 7 an seinem Handhabungsabschnitt 8 zusammengedrückt wird, wodurch der Grundkörper 25 des Dichtstopfens 7 zumindest teilweise kollabiert und aus der Ausnehmung 5 herausgezogen werden kann. Sofern ein Dichtstopfen 7f gemäß Fig. 7 eingesetzt wird, kann die radiale Spannung durch Lösen der Spannmittel 37, 39 reduziert werden, bis eine Entnahme möglich ist.

Nach der Entnahme des Dichtstopfens 7 aus dem Bauteil 3 kann das Bauteil im Fertigungsablauf weitergegeben werden und das Verfahren kann in einem Schritt 111 beendet werden.

Für den Dichtstopfen 7 muss aber das Verfahren an dieser Stelle noch nicht beendet sein: In einem nächsten Verfahrensschritt 113 erfolgt vorzugsweise ein Reinigen des Dichtstopfens 7 von Lackresten, sodass in einem nachfolgenden Verfahrensschritt 115 der so aufbereitete Dichtstopfen 7 erneut für einen Verfahrensdurchlauf bereitgestellt und dem Verfahrensschritt 105 erneut zugeführt werden kann.

Solange der Dichtstopfen 7 beschädigungsfrei bleibt und seine elastische Formänderungsfähigkeit in ausreichendem Maße erhalten wird, lässt sich der Dichtstopfen viele Male im erfindungsgemäßen Verfahren einsetzen.

### Bezugszeichenliste (Teil der Beschreibung)

- 1: Fahrzeug
- 3: Bauteil
- 4: Grundkörper
- 5: Ausnehmung, Bauteil
- 7: 7a-7f: Dichtstopfen
- 8: Handhabungsabschnitt
- 9: Innenfläche
- 10: Ausnehmung, Handhabungsabschnitt
- 11: Dichtflächenanordnung
- 11a-11h: Dichtfläche
- 13a, 13b: Gleithülse
- 15: Gleitfläche
- 17: Durchlassöffnung, Dichtstopfen
- 19: Stirnseite, Bauteil
- 21: Stirnseite, Bauteil
- 23: 23a, 23b: endseitiger Abschnitt, Gleithülse
- 25: Grundkörper, Dichtstopfen
- 27: Aufdickung
- 29: radiale Ausnehmung, Dichtstopfen
- 31: Fase, Bauteil
- 32: Stützring
- 33: Spalt, Bauteil
- 35a, 35b: Stopfenteil
- 37: Spindel
- 39: Spannmutter
- 41: Hülse, Dichtstopfen
- 42: Hülse, Dichtstopfen
- 43: Scheibe
- 101, 103, 105, 107, 109, 111, 113, 115: Verfahrensschritt
- L: Längsachse

## Patentansprüche

1. Verfahren zum Lackieren eines Bauteils (3) einer Fahrzeugbremse (1), wobei das Bauteil (3) eine Ausnehmung (5) aufweist, die sich in Richtung einer Längsachse (L) erstreckt, und die eine von Lack freizuhaltende Innenfläche (9) aufweist, umfassend die Schritte:
- Bereitstellen (103) des Bauteils (3),
- Einführen (105) eines Dichtstopfens (7) in die Ausnehmung (5) des Bauteils, wobei der Dichtstopfen (7) wenigstens eine Dichtfläche (11a-11h) aufweist, und die Dichtfläche (11a-11h) innerhalb der Ausnehmung (5), bezogen auf die Längsachse (L), in radialer Richtung dichtend mit der Innenfläche (9) in Anlage gebracht wird, und
- Lackieren des Bauteils (3), nachdem der Dichtstopfen (7) eingeführt worden ist.

2. Verfahren nach Anspruch 1, wobei das Bauteil (3) eine Stirnfläche (19, 21) aufweist, in welche die Ausnehmung (5) eingebracht ist, und der Dichtstopfen (7) derart in die Ausnehmung (5) eingeführt wird, dass er in eingeführtem Zustand zu der Stirnfläche (19, 21) beabstandet ist.

3. Verfahren nach Anspruch 2, wobei die Stirnfläche (19) eine erste Stirnfläche ist, und das Bauteil (3) ferner eine zweite Stirnfläche (21) aufweist, wobei sich die Ausnehmung (5) von der ersten Stirnfläche (19) bis zu der zweiten Stirnfläche (21) durch das Bauteil (3) hindurch erstreckt, und der Dichtstopfen (7) derart in die Ausnehmung (5) eingeführt wird, dass er in eingeführtem Zustand zu der ersten Stirnfläche (19) und zu der zweiten Stirnfläche (21) beabstandet ist.

4. Verfahren nach einem der vorstehenden Ansprüche, wobei im Inneren der Ausnehmung (5) eine Gleithülse (13a, 13b) angeordnet ist, die eine Gleitfläche (15) aufweist, welche einen Teil der Innenfläche (9) der Ausnehmung (5) bildet.

5. Verfahren nach Anspruch 4, wobei der Dichtstopfen (7) so eingeführt wird, dass er im eingeführten Zustand, vorzugsweise vollflächig, mit wenigstens einer Dichtfläche (11d, 11d, 11g, 11h) dichtend an der Gleitfläche (15) anliegt.

6. Verfahren nach einem der vorstehenden Ansprüche, wobei die Dichtfläche eine erste Dichtfläche (11a, 11g) ist, und der Dichtstopfen (7) ferner wenigstens eine zweite Dichtfläche (11b-11h) aufweist, die in Längsrichtung zu der ersten Dichtfläche (11a, 11g) beabstandet am Dichtstopfen (7) angeordnet ist, und wobei der Dichtstopfen (7) derart eingeführt wird, dass er auch mit der zweiten Dichtfläche (11b-11h) innerhalb der Ausnehmung (5), bezogen auf die Längsachse (L) in radialer Richtung, dichtend mit der Innenfläche (9) in Anlage gebracht wird.

7. Verfahren nach einem der vorstehenden Ansprüche, wobei die Gleithülse eine erste Gleithülse (13a) ist, und im Inneren der Ausnehmung (5) ferner eine zweite Gleithülse (13b) angeordnet ist, die eine zweite Gleitfläche (15) aufweist, welche einen Teil der Innenfläche (9) der Ausnehmung (5) bildet.

8. Verfahren nach Anspruch 7, wobei der Dichtstopfen (7) derart eingeführt wird, dass er im eingeführten Zustand, vorzugsweise vollflächig, mit der zweiten Dichtfläche (11d, 11h dichtend an der zweiten Gleitfläche (15) anliegt.

9. Verfahren nach einem der Ansprüche 1 bis 7, wobei die erste und zweite Dichtfläche (11a, 11c; 11a, 11e; 11a, 11f) des Dichtstopfens (7) derart zu einander beabstandet sind, dass sie die Gleithülse oder Gleithülsen (13a, 13b) zwischen sich einschließen.

10. Verfahren nach einem der vorstehenden Ansprüche, wobei im eingeführten Zustand zumindest eine der Dichtflächen (11b, 11d) an einem in Richtung der Längsachse (L) endseitigen Abschnitt (23a, 23b) der Gleithülsen (13a, 13b) dichtend anliegt.

11. Verfahren nach einem der vorstehenden Ansprüche, wobei im eingeführten Zustand zumindest eine der Dichtflächen (11a, 11c, 11e, 11f) neben den Gleithülsen (13a, 13b), axial beabstandet oder angrenzend, an der Ausnehmung dichtend anliegt.

12. Verfahren nach einem der vorstehenden Ansprüche, wobei der Dichtstopfen (7) einen Grundkörper (25) aus einem elastisch verformbaren Material aufweist, vorzugsweise Silikon oder einem silikonhaltigen Werkstoff.

13. Verfahren nach Anspruch 12, wobei der Grundkörper (25) als Hohlkörper mit einer Längsachse (L) ausgebildet ist, und vorzugsweise in Richtung seiner Längsachse (L) an einem oder beiden Enden offen ist.

14. Verfahren nach einem der vorstehenden Ansprüche, wobei der Dichtstopfen (7) im Bereich zumindest eines seiner Enden versteift ist, wobei der Dichtstopfen (7) vorzugsweise eine Materialaufdickung (27) und/oder einen Stützring (32) aufweist, und wobei in dem Schritt des Einführens vorzugsweise auch das versteifte Ende in die Ausnehmung (5) eingeführt wird.

15. Verfahren nach einem der vorstehenden Ansprüche, umfassend die Schritte:
- Entfernen (109) des Dichtstopfens (7) nach dem Schritt des Lackierens,
- Reinigen (113) des Dichtstopfens (7) von Lackresten, und
- Bereitstellen (115) des Dichtstopfens (7) zur erneuten Verwendung in einem weiteren Durchgang des Verfahrens.

## Claims

1. Method for coating a component (3) of a vehicle brake (1), wherein the component (3) has a recess (5) which extends in the direction of a longitudinal axis (L) and which has an inner surface (9) to be kept free of coating, comprising the steps of:
- providing (103) the component (3),
- inserting (105) a sealing plug (7) into the recess (5) of the component, wherein the sealing plug (7) has at least one sealing surface (11a-11h), and the sealing surface (11a-11h) within the recess (5) is brought into sealing abutment with the inner surface (9) in the radial direction, relative to the longitudinal axis (L), and
- coating the component (3) after the sealing plug (7) has been inserted.

2. Method according to claim 1, wherein the component (3) has an end face (19, 21) into which the recess (5) is introduced, and the sealing plug (7) is inserted into the recess (5) such that, in the inserted state, the sealing plug is spaced apart from the end face (19, 21).

3. Method according to claim 2, wherein the end face (19) is a first end face, and the component (3) also has a second end face (21), wherein the recess (5) extends from the first end face (19) to the second end face (21) through the component (3), and the sealing plug (7) is inserted into the recess (5) such that, in the inserted state, the sealing plug is spaced apart from the first end face (19) and from the second end face (21).

4. Method according to any of the preceding claims, wherein a sliding sleeve (13a, 13b) is arranged in the interior of the recess (5), which sleeve has a sliding surface (15) which forms part of the inner surface (9) of the recess (5).

5. Method according to claim 4, wherein the sealing plug (7) is inserted such that, in the inserted state, preferably over its entire surface, at least one sealing surface (11d, 11d, 11g, 11h) is in sealing abutment with the sliding surface (15).

6. Method according to any of the preceding claims, wherein the sealing surface is a first sealing surface (11a, 11g), and the sealing plug (7) also has at least one second sealing surface (11b-11h) which is arranged on the sealing plug (7) so as to be spaced apart from the first sealing surface (11a, 11g) in the longitudinal direction, and wherein the sealing plug (7) is inserted such that it is also brought into sealing abutment with the inner surface (9) within the recess (5), in the radial direction relative to the longitudinal axis (L), using the second sealing surface (11b-11h).

7. Method according to any of the preceding claims, wherein the sliding sleeve is a first sliding sleeve (13a), and a second sliding sleeve (13b) is also arranged in the interior of the recess (5), which second sliding sleeve has a second sliding surface (15) which forms part of the inner surface (9) of the recess (5).

8. Method according to claim 7, wherein the sealing plug (7) is inserted such that, in the inserted state, preferably over its entire surface, the second sealing surface (11d, 11h is in sealing abutment with the second sliding surface (15).

9. Method according to any of claims 1 to 7, wherein the first and the second sealing surface (11a, 11c; 11a, 11e; 11a, 11f) of the sealing plug (7) are spaced apart from one another such that they enclose the sliding sleeve or sliding sleeves (13a, 13b) therebetween.

10. Method according to any of the preceding claims, wherein, in the inserted state, at least one of the sealing surfaces (11b, 11d) is in sealing abutment with a portion (23a, 23b) of the sliding sleeves (13a, 13b) that is at the end in the direction of the longitudinal axis (L).

11. Method according to any of the preceding claims, wherein in the inserted state, at least one of the sealing surfaces (11a, 11c, 11e, 11f) next to the sliding sleeves (13a, 13b), axially spaced or adjacent, is in sealing abutment with the recess.

12. Method according to any of the preceding claims, wherein the sealing plug (7) has a main body (25) made of an elastically deformable material, preferably silicone or a silicone-containing material.

13. Method according to claim 12, wherein the main body (25) is designed as a hollow body having a longitudinal axis (L), and is preferably open at one or both ends in the direction of its longitudinal axis (L).

14. Method according to any of the preceding claims, wherein the sealing plug (7) is reinforced in the region of at least one of its ends, wherein the sealing plug (7) preferably has a material thickening (27) and/or a support ring (32), and wherein in the insertion step, the reinforced end is preferably also inserted into the recess (5).

15. Method according to any of the preceding claims, comprising the steps of:
- removing (109) the sealing plug (7) after the coating step,
- cleaning (113) the sealing plug (7) of coating residues, and
- providing (115) the sealing plug (7) for reuse in a further iteration of the process.

## Revendications

1. Procédé permettant de peindre un composant (3) d'un frein de véhicule (1), dans lequel le composant (3) présente un évidement (5) qui s'étend en direction d'un axe longitudinal (L) et qui présente une surface intérieure (9) à maintenir exempte de peinture, comprenant les étapes consistant à :
- fournir (103) le composant (3),
- introduire (105) un capuchon d'étanchéité (7) dans l'évidement (5) du composant, dans lequel le capuchon d'étanchéité (7) présente au moins une surface d'étanchéité (11a-11h), et la surface d'étanchéité (11a-11h) est mise en contact de manière étanche avec la surface intérieure (9) à l'intérieur de l'évidement (5), par rapport à l'axe longitudinal (L), dans la direction radiale, et
- peindre le composant (3) après avoir introduit le capuchon d'étanchéité (7).

2. Procédé selon la revendication 1, dans lequel le composant (3) présente une surface frontale (19, 21) dans laquelle est placé l'évidement (5), et le capuchon d'étanchéité (7) est introduit dans l'évidement (5) de telle sorte qu'il est espacé, à l'état introduit, de la surface frontale (19, 21).

3. Procédé selon la revendication 2, dans lequel la surface frontale (19) est une première surface frontale, et le composant (3) présente en outre une seconde surface frontale (21), dans lequel l'évidement (5) s'étend de la première surface frontale (19) à la seconde surface frontale (21) à travers le composant (3), et le capuchon d'étanchéité (7) est introduit dans l'évidement (5) de telle sorte qu'il est espacé, à l'état introduit, de la première surface frontale (19) et de la seconde surface frontale (21).

4. Procédé selon l'une des revendications précédentes, dans lequel une douille coulissante (13a, 13b) est disposée à l'intérieur de l'évidement (5) et présente une surface coulissante (15) qui forme une partie de la surface intérieure (9) de l'évidement (5).

5. Procédé selon la revendication 4, dans lequel le capuchon d'étanchéité (7) est introduit de telle sorte que, à l'état introduit, il entre en contact de manière étanche par au moins une surface d'étanchéité (11d, 11d, 11g, 11h), de préférence sur toute sa surface, avec la surface coulissante (15).

6. Procédé selon l'une des revendications précédentes, dans lequel la surface d'étanchéité est une première surface d'étanchéité (11a, 11g), et le capuchon d'étanchéité (7) présente en outre au moins une seconde surface d'étanchéité (11b-11h) qui est disposée sur le capuchon d'étanchéité (7) et espacée dans la direction longitudinale de la première surface d'étanchéité (11a, 11g), et dans lequel le capuchon d'étanchéité (7) est introduit de telle sorte qu'il est également mis en contact de manière étanche par la seconde surface d'étanchéité (11b-11h) à l'intérieur de l'évidement (5) avec la surface intérieure (9), par rapport à l'axe longitudinal (L) dans la direction radiale.

7. Procédé selon l'une des revendications précédentes, dans lequel la douille coulissante est une première douille coulissante (13a), et à l'intérieur de l'évidement (5) est en outre disposée une seconde douille coulissante (13b) qui présente une seconde surface coulissante (15) qui forme une partie de la surface intérieure (9) de l'évidement (5).

8. Procédé selon la revendication 7, dans lequel le capuchon d'étanchéité (7) est introduit de telle sorte que, à l'état introduit, il entre en contact de manière étanche par la seconde surface d'étanchéité (11d, 11h), de préférence sur toute sa surface, avec la seconde surface coulissante (15).

9. Procédé selon l'une des revendications 1 à 7, dans lequel la première et la seconde surface d'étanchéité (11a, 11c ; 11a, 11e ; 11a, 11f) du capuchon d'étanchéité (7) sont espacées l'une de l'autre de telle sorte qu'elles enferment entre elles la douille coulissante ou les douilles coulissantes (13a, 13b).

10. Procédé selon l'une des revendications précédentes, dans lequel, à l'état inséré, au moins l'une des surfaces d'étanchéité (11b, 11d) entre en contact de manière étanche avec une section (23a, 23b), côté extérieur en direction de l'axe longitudinal (L), des douilles coulissantes (13a, 13b).

11. Procédé selon l'une des revendications précédentes, dans lequel, à l'état inséré, au moins l'une des surfaces d'étanchéité (11a, 11c, 11e, 11f), outre les douilles coulissantes (13a, 13b), entre en contact de manière étanche avec l'évidement de manière espacée axialement ou adjacente.

12. Procédé selon l'une des revendications précédentes, dans lequel le capuchon d'étanchéité (7) présente un corps de base (25) constitué d'un matériau élastiquement déformable, de préférence de silicone ou d'un matériau contenant du silicone.

13. Procédé selon la revendication 12, dans lequel le corps de base (25) est réalisé sous forme de corps creux comportant un axe longitudinal (L), et est de préférence ouvert en direction de son axe longitudinal (L) au niveau d'une ou des deux extrémités.

14. Procédé selon l'une des revendications précédentes, dans lequel le capuchon d'étanchéité (7) est rigidifié dans la zone d'au moins une de ses extrémités, dans lequel le capuchon d'étanchéité (7) présente de préférence une surépaisseur de matériau (27) et/ou une bague d'appui (32), et dans lequel, à l'étape d'introduction, l'extrémité rigidifiée est de préférence également introduite dans l'évidement (5).

15. Procédé selon l'une des revendications précédentes, comprenant les étapes consistant à :
- retirer (109) le capuchon d'étanchéité (7) après l'étape de peinture,
- nettoyer (113) le capuchon d'étanchéité (7) de résidus de peinture, et
- fournir (115) le capuchon d'étanchéité (7) pour une nouvelle utilisation dans un autre passage du procédé.
